# EUROPEAN PATENT SPECIFICATION

(11) **EP 2 420 756 B1**
(45) Date of publication and mention of the grant of the patent: **18.09.2013**
(21) Application number: 11003946.8
(22) Date of filing: 12.05.2011
(51) Int. Cl.: F24H 8/00, F02G 1/043

(54) **Exhaust structure of sub-boiler of small cogenerator and cover assembly for exhaust channel of sub-boiler of small cogenerator**
Auspuffstruktur von Unterboiler eines kleinen Blockheizkraftwerks und Abdeckungsanordnung für Auspuffkanal von Unterboiler eines kleinen Blockheizkraftwerks
Structure d'échappement de sous-chaudière de petit cogénérateur et assemblage de couvercle pour canal d'échappement de sous-chaudière de petit cogénérateur

(30) Priority: 17.08.2010 KR 20100079464; 17.08.2010 KR 20100079467
(43) Date of publication of application: 22.02.2012
(73) Proprietor: Kyungdong Navien Co., Ltd., Pyeongtaek-si Gyeonggi-do 450-818 (KR)
(72) Inventor: Park, Dae Woong, Namdong-gu Incheon 405-222 (KR); Jang, Duck Pyo, Nowon-gu Seoul 139-888 (KR)
(74) Representative: Witzany, Manfred

(56) References cited:
- WO-A1-2004/102081
- WO-A1-2008/001107

## Description

### [Technical Field]

The present invention relates to a device according to the preamble of claim 1.

### [Background Art]

Recently, with the increase interest in finding a new energy source, it has become more important to collect and reuse latent heat of cooling water or a middle- and low-temperature exhaust gas that may be considered as being produced in almost all of the industry fields.

An Organic Rankine Cycle is usually applied when converting low-temperature heat energy into shaft power that is advanced energy.

The Organic Rankine Cycle is a type of power cycle that makes it possible to acquire shaft power with relatively high thermal efficiency even under a heat source condition at low temperature by using an organic heat carrier having steam pressure higher than water as working fluid.

For example, the Organic Rankine Cycle known in the art is implemented by arranging interactive independent parts, such as a circulation pump, a turbine, a condenser, and an evaporator, and has a closed cycle in which working fluid produces shaft power while expanding after vaporized in an evaporator, is liquefied again in the condenser and then supplied back to the evaporator by the pump.

However, the Organic Rankine System as a complicated configuration of the parts and consumes a large amount of organic heat carrier and it is required to accurately control the parts, such that it is now difficult to operate and stop the system.

Meanwhile, there is a stirling engine as another example, in which the parts constituting a power cycle are combined in one engine and a gas, such as air, is used as the working fluid, such that the device is very simple and easily operated.

Further, the stirling engine has the highest thermal efficiency in power cycles, such that when middle- and low-temperature heat energy is converted into power, the structure is much simpler than the Organic Rankine System, while energy conversion can be achieved with high efficiency.

Recently, a Mirco CHP (Combined Heat and Power) that is a type that simultaneously generates electricity and heat even at home by using the stirling engine has been proposed, and Korean Unexamined Patent Application Publication No. 2006-0013391 can be exemplified.

The electricity generation type of small cogenerator can be considered as a type of domestic boiler that is equipped with a stirling engine and a sub-boiler, such that it generates electricity through the stirling engine and makes hot water for heating through the sub-boiler.

However, according to the structure of the small cogenerator, an exhaust gas produced by combustion in an engine burner that supplies heat to the stirling engine is discharged directly to the atmosphere, such that energy is wasted by discharging the exhaust gas with intense heat, and it is difficult to decrease generation of NOx, because the gas is directly discharged with intense heat.

In order to remove the problem, the applicant(s) has attempted a structure that discharges an engine exhaust gas to the atmosphere after exchanging heat by guiding the engine exhaust gas to a latent heat exchanger.

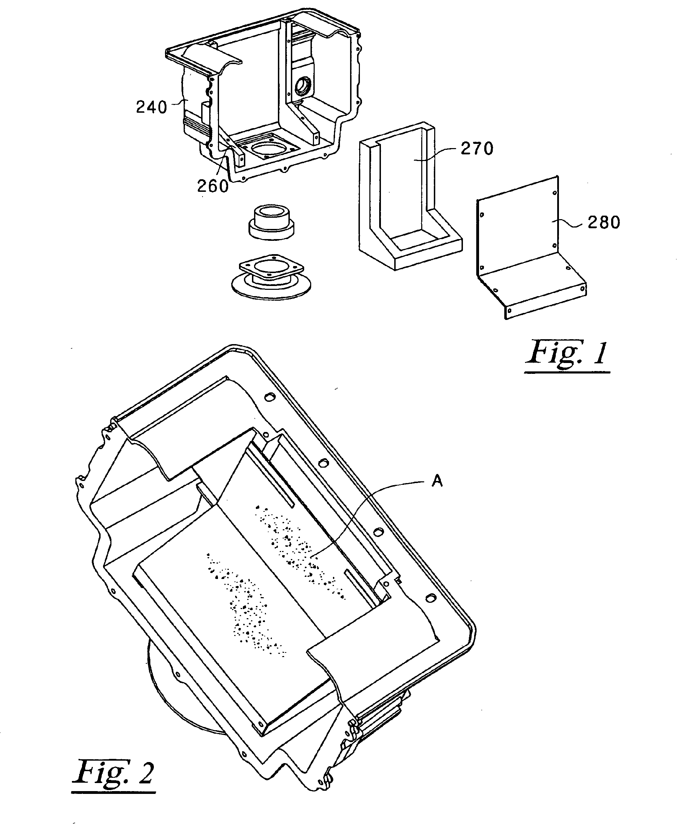

For example, as shown in FIG. 1, separators 260 are formed on the inner surface of a cover 240 of a sub-boiler, a channel is formed by covering the separators 260 with a sealing member 280, and an insulator 270 is disposed in the channel to prevent heat from being taken.

Further, the material was aluminum and stainless steel.

However, galvanic corrosion (A, accelerated when different materials are used and electricity is applied to condensed water) is generated by generation of condensed water of the sub-boiler, as shown in FIG. 2, and galvanic corrosion is rapidly propagated in a product by capillary action.

In this state, when condensation is generated in a condensing boiler (condensed water is generated when the engine is cooled while repetitively operating and stopping), it is advantageous because efficiency of the boiler increases, but galvanic corrosion due to the condensed water decreases the product life span, such that they are contrary to each other.

Therefore, although it is possible to replace the sealing member with aluminum, it is difficult to avoid deterioration of the internal insulator due to the capillary action and the cost increases, because a sealant made of a specific material that can be proof against insulation and high temperature is required and bolts that combine the sub-boiler cover with the sealing member to prevent galvanic corrosion should be replaced with not common stainless steel bolts, but insulating bolts.

Document WO 2004/102081 discloses the preamble of claim 1. It discloses an exhaust structure for sub-boiler of a cogenerator including a stirling engine. This stirling engine is heated by an engine burner for production of electricity. The sub-boiler is disposed on the stirling engine. The sub-boiler comprises a sensible heat-exchanger and a latent heat-exchanger. It is making hot water. A channel is connecting the latent heat-exchanger with an engine heat, where an exhaust gas heating the stirling engine is discharged. This channel is formed in such a way that the discharged exhaust gas exchanges heat while flowing from the top to the bottom of the latent heat exchanger. This exhaust structure is forming the starting point of the present invention.

### [Disclosure]

### [Technical Problem]

The present invention has been made in an effort to provide an exhaust structure of a sub-boiler of a small cogenerator that can collect intensive heat included in an exhaust gas with high efficiency and reduce generation of NOx by not directly discharging the exhaust gas, but allowing an exhaust gas produced when heat is supplied to operate a stirling engine in a small cogenerator including the stirling engine and a sub-boiler to be discharged after heat is sufficiently exchanged through a latent heat exchanger of the sub-boiler.

Further, the present invention has been made in an effort to provide a cover assembly for forming an exhaust channel of a sub-boiler of a small cogenerator that can effectively prevent galvanic corrosion without preventing generation of condensed water by integrally forming a channel with a cover, when forming the channel that guides an exhaust gas, which is produced when a stirling engine operates, to be discharged to the atmosphere after heat is sufficiently exchanged through a latent heat exchanger, in a small cogenerator including the stirling engine and a sub-boiler.

### [Technical Solution]

The invention is a device according to claim 1.

An exemplary embodiment of the present invention provides an exhaust structure of a sub-boiler of a small cogenerator that includes a stirling engine producing electricity by being heated by an engine burner, and a sub-boiler disposed on the stirling engine, having a sensible heat exchanger and a latent heat exchanger, and making hot water, in which a channel connecting an engine head where an exhaust gas heating the stirling engine is discharged with the latent heat exchanger is formed, and the channel is formed such that the discharged exhaust gas exchanges heat while flowing from the top to the bottom of the latent heat exchanger.

The channel is formed by separators for forming a channel protruding in a cover assembled with a case fixing the latent heat exchanger, a sealing member forming a channel by sealing the separators, a hole formed through the bottom of the cover, and a connection pipe connecting the hole with the engine head of the stirling engine.

An insulator is disposed between the separators and the sealing member.

Another exemplary embodiment of the present invention provides a cover assembly for forming an exhaust channel of a sub-boiler of a small cogenerator that includes a stirling engine producing electricity by being heated by an engine burner, and a sub-boiler disposed on the stirling engine, having a sensible heat exchanger and a latent heat exchanger, and making hot water, in which a channel connecting an engine head where an exhaust gas heating the stirling engine is discharged with the latent heat exchanger is formed, the channel is formed such that the discharged exhaust gas exchanges heat while flowing from the top to the bottom of the latent heat exchanger, and the channel is integrally formed with the inner surface of the cover where the latent heat exchanger is disposed.

The cover including the channel is formed of a ceramic insulator.

An exhaust gas inlet that is the lower end of the channel is inclined upward.

### [Advantageous Effects]

According to the exemplary embodiments of the present invention, it is possible to collect intensive heat included in an exhaust gas and correspondingly reduce waste of energy by making the exhaust gas of the stirling engine flow through the latent heat exchanger of the sub-boiler, to more efficiently heat heating water by using the collected heat and correspondingly improve thermal efficiency. Further, since the exhaust gas is discharged, with the temperature reduced, it is possible to prevent NOx from being produced and reduce fuel cost.

Further, according to the exemplary embodiments of the present invention, it is possible to efficiently prevent galvanic corrosion without preventing generation of condensed water, by integrally forming a channel with a cover, when forming the channel to collect intensive heat included in an exhaust gas, by making the exhaust gas of the stirling engine pass through the latent heat exchanger of the sub-boiler.

### [Description of Drawings]

FIG. 1 is an exploded perspective view showing an existing example of a cover forming an exhaust channel of a sub-boiler relating to the present invention.
FIG. 2 is a view schematically showing an example when galvanic corrosion A is generated in the example of FIG. 1.
FIG. 3 is a schematic view showing a process of discharging an exhaust gas of a stirling engine of a small cogenerator according to an exemplary embodiment of the present invention.
FIG. 4 is a perspective view showing an example of a sub-boiler of a small cogenerator according to an exemplary embodiment of the present invention.
FIGS. 5 and 6 are front view and main part-cross sectional view showing an exhaust channel of a sub-boiler according to an exemplary embodiment of the present invention.
FIG. 7 is a view comparing a cover according to the present invention with a cover of the related art.
FIG. 8 is a view showing the front and rear sides of the cover according to an exemplary embodiment of the present invention, and an example of installing a cover.
FIG. 9 is a view partially showing an example when the cover according to an exemplary embodiment of the present invention is assembled with a latent heat exchanger.
FIG. 10 is an open perspective view showing the main parts of a sub-boiler according to an exemplary embodiment of the present invention.

### [Best Mode]

Hereinafter, exemplary embodiments of the present invention are described in detail with reference to the accompanying drawings.

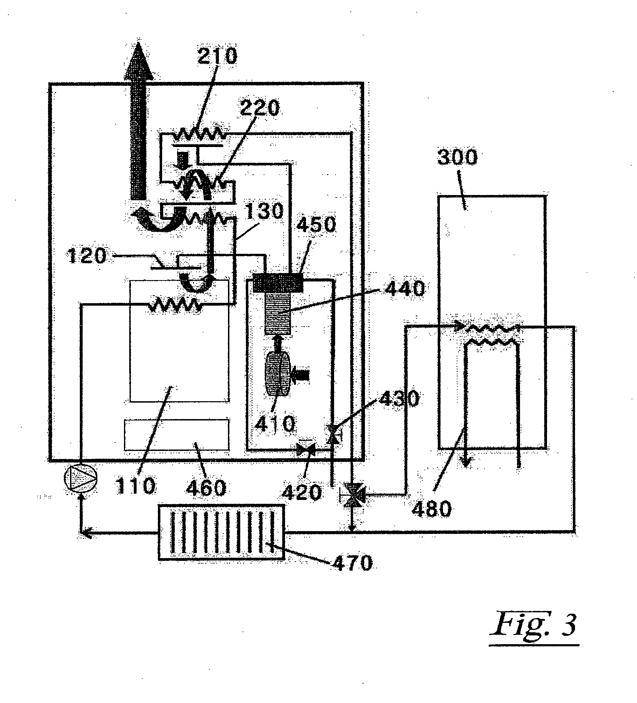

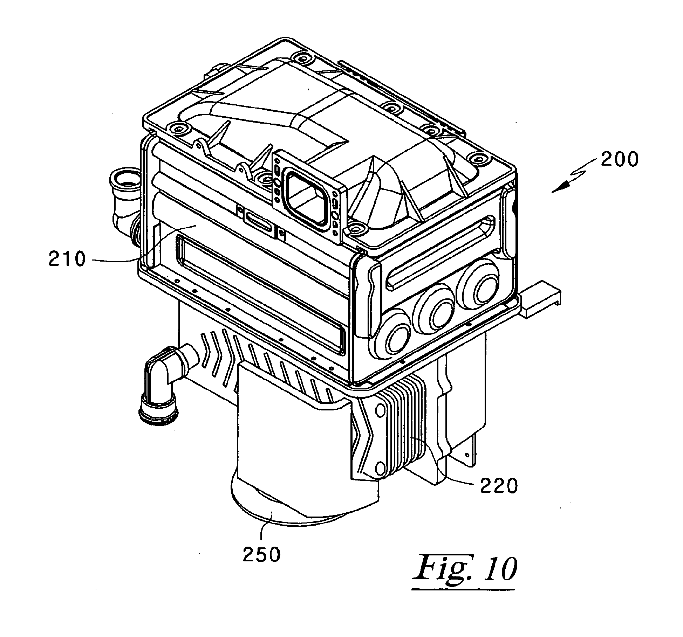

As shown in FIGS. 3 to 6 and FIG. 10, a small cogenerator according to an exemplary embodiment of the present invention includes a housing, a stirling engine 110 is disposed in the housing 100, and a sub-boiler 200 is disposed on the stirling engine 110.

In this structure, the stirling engine 110 is operated by a main boiler (not shown), and when an engine burner 120 of the main boiler heats an engine head (not shown) of the stirling engine 110, working fluid sealed therein produces alternate current due to the operation while expanding/contracting in response to a temperature difference.

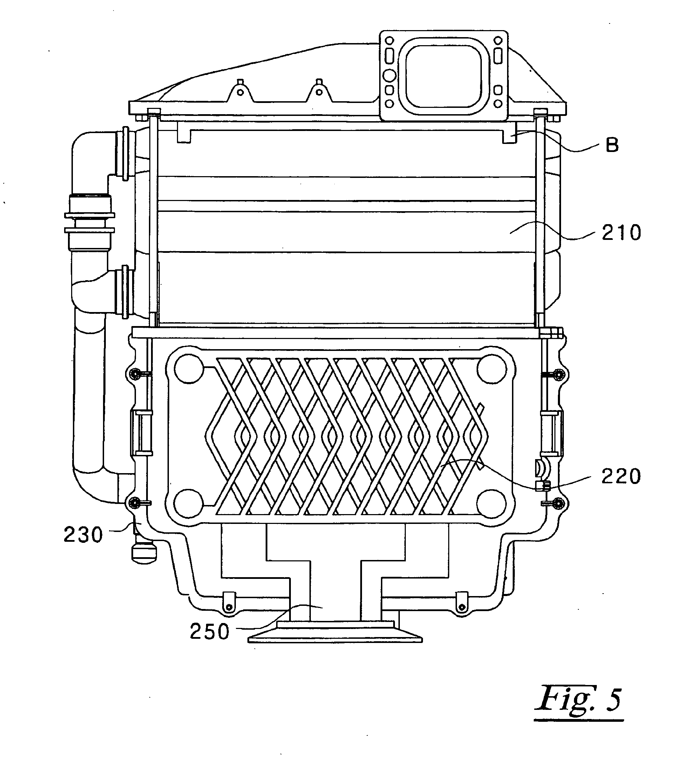

Further, the sub-boiler 200 has a sensible heat exchanger 210 and a latent heat exchanger 220 and makes heating water through heat exchange with intensive heat supplied through a burner B (see FIG. 5).

Air supplied by a rotating fan 410 is mixed with gas inside a venturi or mixer 450, in which an amount of gas supplied is controlled via gas valves 420, 430. Then mixed gas with air is provided to the burner to be combusted therein. Also, a spool valve 440 is located at one side of the fan 410, to which side air is supplied out. The spool valve 440 is operated to control an amount of air supplied to the mixer 450, thereby controlling a mixing ratio of air and gas.

The heating water made in this process is used in a heating apparatus 470 such as a radiator. Also the hot water made can be stored in a storage tank 300 by indirect heat exchange and then can be supplied to a hot water line 480. A cooling water pipe 130 passes through the latent heat exchanger 220 and the sensible heat exchanger 210, after passing through the stirling engine 110 for the heating water to cool the stirling engine 110 when the heat exchange is completed.

Also, an exhaust gas having a low temperature after the heat exchanging is completed is discharged via a exhaust gas path. Also, a control unit 460 is generally provided so as to control operations of the stirling engine 110 and sub-boiler 200.

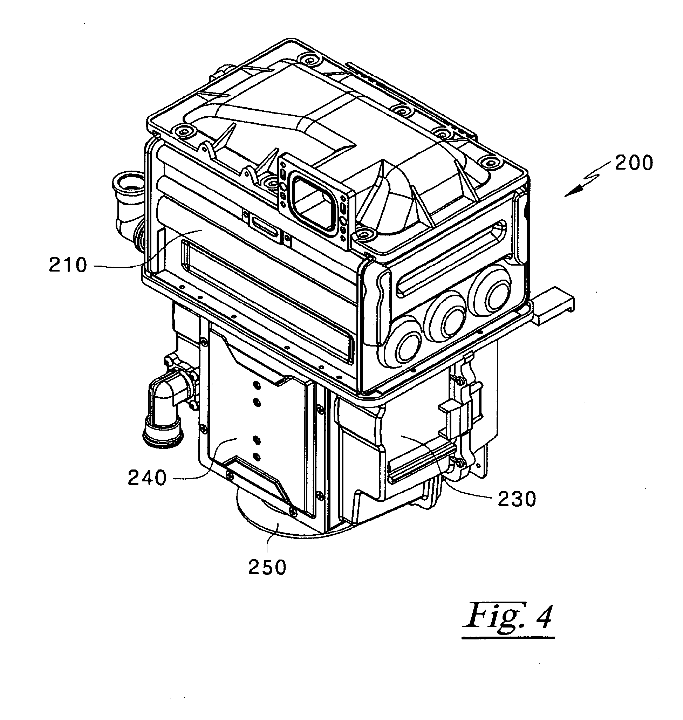

Meanwhile, the sub-boiler 200, as shown in FIGS. 4 to 6 and FIG. 10, accommodates the latent heat exchanger 220 in a case 230 and the sensible heat exchanger 210 is fastened to the top of the case 230.

Further, the front of the case 230 is partially open and the opening is sealed by a cover 240 that forms a channel for an engine exhaust gas.

In this configuration, a hole (not shown) is formed through the bottom of the cover 240, a connection pipe 250 is inserted in the hole, and the connection pipe 250 is connected to the engine head of the stirling engine 110 such that an exhaust gas that is discharged after being burned by the engine burner 120 and heating the stirling engine 110 is guided.

In this case, the connection pipe 250 is implemented in a flange shape to be easily assembled, and if needed, it is preferable to minimize loss of heat by using an insulator to increase insulation effect such that heat exchange efficiency between the exhaust gas and the latent heat exchanger 220 is increased. In this configuration, it is more preferable that the connection pipe 250 is made of ceramic having excellent insulation effect to increase the efficiency by preventing loss of heat.

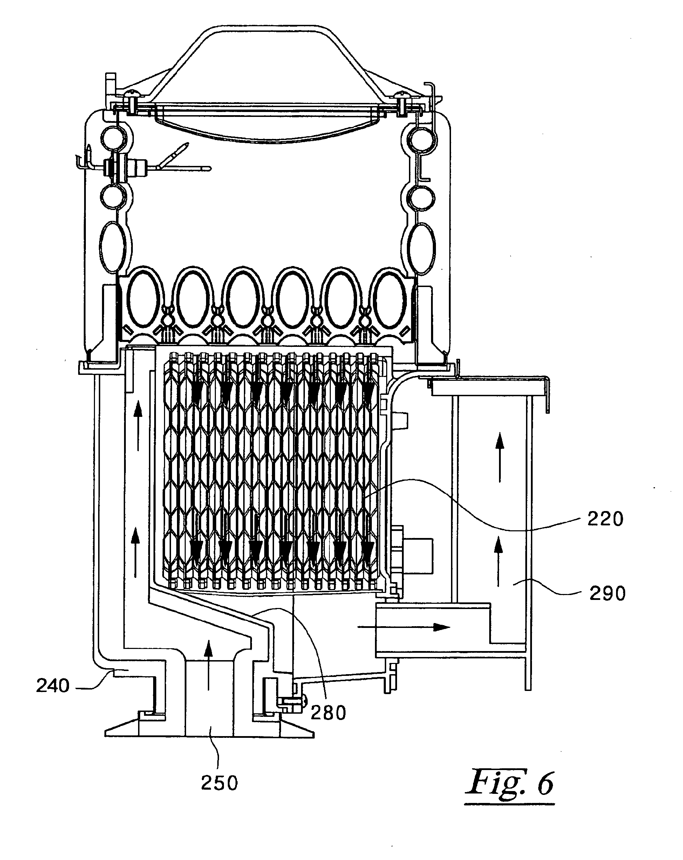

In particular, in the present invention, separators 260 are formed inside the cover 240 such that a channel that guides the exhaust gas discharged from the upper end of the connection pipe 250 to the latent heat exchanger 220, as shown in FIGS. 1 to 6, and the separators 260 are covered with a sealing member 280 such that discharging flow of the exhaust gas is generated, as shown in FIG. 6.

That is, the structure is formed such that the engine exhaust gas is not directly discharged, but discharged after being guided to the latent heat exchanger 220 and moved down through the latent heat exchanger 220, in order to increase thermal efficiency by completely collecting even the intensive heat wasted with the exhaust gas and reduce generation of NOx by decreasing the temperature of the exhaust gas.

In this configuration, in FIG. 1, an insulator 270 may be further disposed between the separators 260 and the sealing member 280.

Further, according to the exemplary embodiment of the present invention, the channel that guides the exhaust gas discharged through the upper end of the connection pipe 250 to the latent heat exchanger 220 is integrally formed on the inner surface of the cover 240 (see FIGS. 1 and 3).

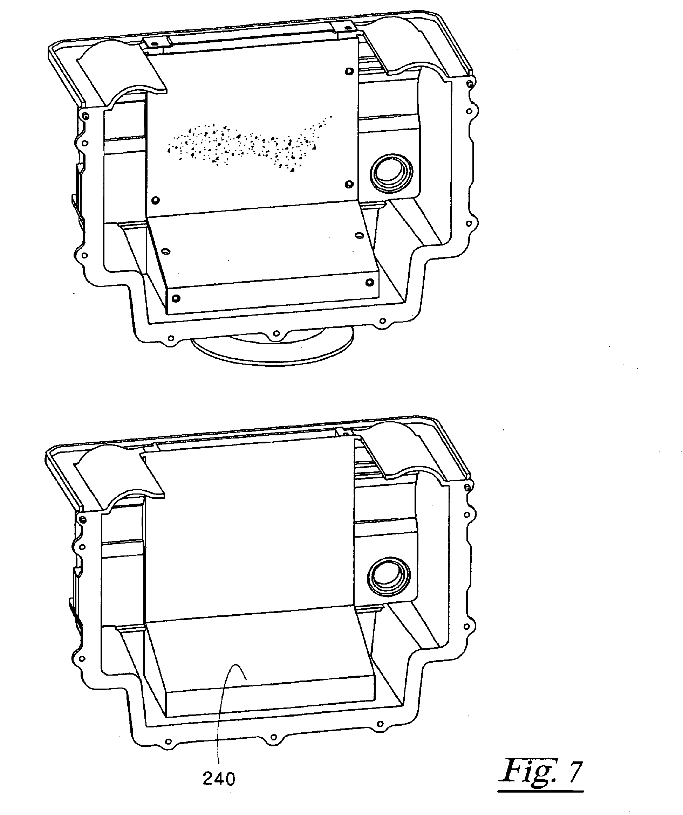

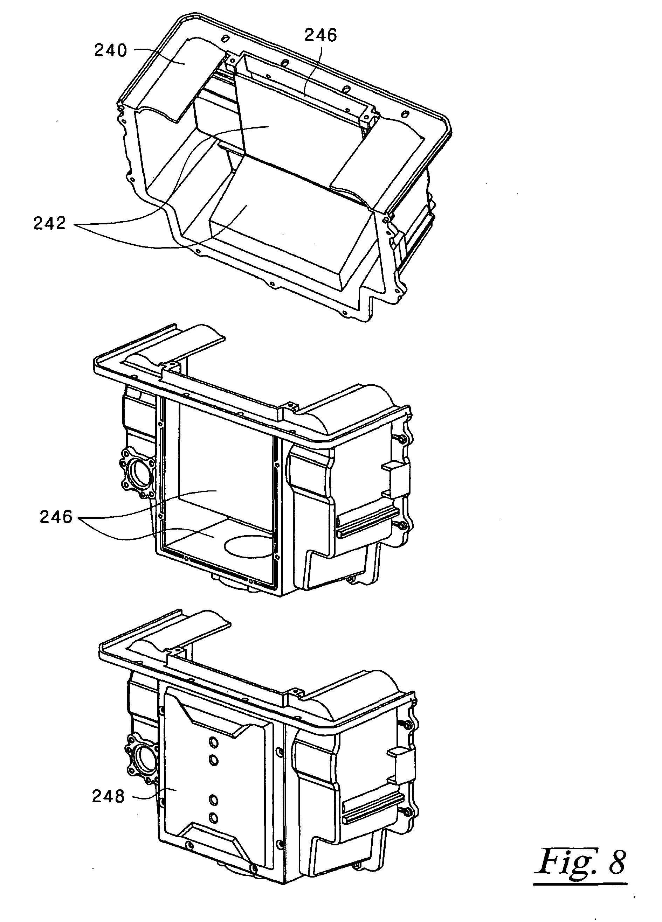

That is, as shown in FIGS. 7 and 8, not a separate sealing member is coupled to the inner surface of the cover 240, as in the related art, but a sealing wall 242 is integrally formed with the cover 240 and a channel 246 is formed inside the sealing wall 242, when the cover 240 is formed.

Therefore, the walls forming the channel 246, around the channel 246, are all made of the same material as the cover 240.

Preferably, all of the walls of the cover 240 and the channel 246 are formed of ceramic insulators.

Further, it is advantageous to increase the thickness of the channel 246 to 20 mm, in comparison to 10 mm of the related art, and incline upward the inlet of the channel 246 connected to the upper end of the connection pipe 250, in order to make the flow of the exhaust gas smooth, reduce the loss of heat, and improve condensation conditions of the exhaust gas while preventing the temperature of the condensed water from increasing.

Further, the rear side of the cover 240 is covered with a covering 248 to seal the exposed channel 246, as shown in FIG. 8.

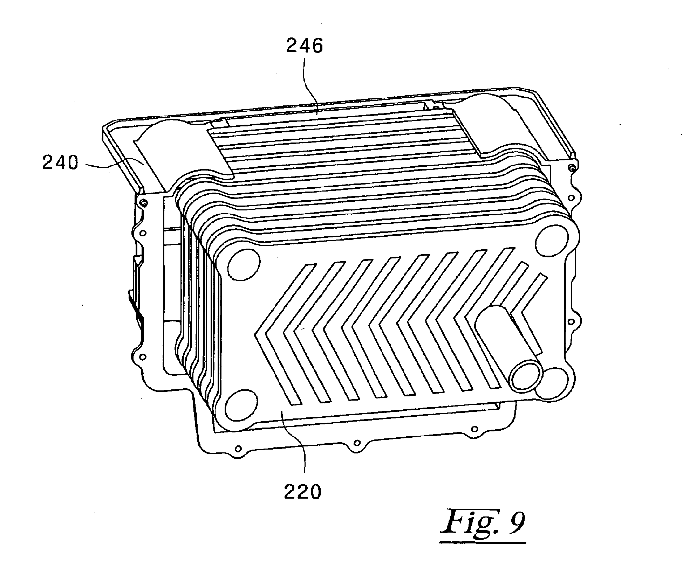

Therefore, as shown in FIG. 9, the exhaust gas guided to the top of the latent heat exchanger 220 through the channel 246 exchanges heat while flowing to the bottom from the top of the latent heat exchanger 220, and is then discharged to the atmosphere through an exhaust channel 290 (see FIG. 6) after finishing the heat exchange.

The present invention with the configuration has the following operational relationship.

The small cogenerator according to the exemplary embodiment of the present invention is operated by a gas, which is a heat source, and produces electricity and hot water.

That is, some of the gas produces electricity by heating the stirling engine 110 through the engine burner 120, and the rest of the gas is supplied to the sub-boiler 200, which is a condensing boiler, and heats a flat burner B, in which intensive heat generated in this process is exchanged with cold water flowing through two heat exchangers, thereby making hot water.

In this process, the exhaust gas produced when the engine burner 120 operates and burns a gas flows upward through the connection pipe 250 directly connected to the engine head (not shown) and the exhaust gas with intensive heat that has flowed upward flows upward in separation from the latent heat exchanger 220, through the channel formed by the sealing member 280 and the separators 260 inside the cover 240 connected with the connection pipe 250 or the channel integrally formed inside the cover 240 connected with the connection pipe 250.

Thereafter, when flowing up to the uppermost end of the channel, the exhaust gas flowing up flows into the spaces of the latent heat exchanger 220 because the channel is open such that the exhaust gas can come in contact with the latent heat exchanger 220 at the uppermost end, and heat is exchanged in this process. Further, the exhaust gas with the heat removed flows upward through the exhaust channel 290 at the lowermost end of the latent heat exchanger 220 and is then discharged to the atmosphere.

As described above, it is possible to improve performance of the cogenerator by increasing heat exchange efficiency or thermal efficiency, by making intensive heat, which is discharged through the stirling engine 110, absorbed in the latent heat exchanger 220 that absorbs condensation latent heat of the sub-boiler 200.

Further, as the thermal efficiency increases, fuel consumption can be reduced and the temperature of the exhaust gas can be sufficiently reduced, which contributes to reducing NOx.

Further, the present invention has the advantage that galvanic corrosion due to condensed water produced by the condensing type of sub-boiler does not occur, such that the life span extends and the efficiency is improved, because the material of the channel 246 is a ceramic insulator that is the same as the cover 240.

That is, it can be expected to contribute to improving efficiency because it is possible to prevent galvanic corrosion due to the condensed water, regardless of generation of condensed water, and allow the exhaust gas discharged through the channel to smoothly flow through the latent heat exchanger, not preventing generation of condensed water relating to condensation latent heat exchange efficiency of the sub-boiler.

## Claims

1. Device containing a cogenerator, comprising a subboiler (200), containing an exhaust structure, said cogenerator includes a stirling engine (110) producing electricity being heated by an engine burner (120), and the sub-boiler (200) being disposed on the stirling engine (110), said sub-boiler (200) having a sensible heat exchanger (210) and a latent heat X
exchanger (220), and making hot water,
wherein a channel connecting the latent heat exchanger (220) with an engine head where an exhaust gas heating the stirling engine (110) is discharged is formed, and
the channel is formed such that the discharged exhaust gas exchanges heat while flowing from the top to the bottom of the latent heat exchanger (220), **characterized in that** the channel is formed by separators (260) for forming a channel protruding in a cover (240) assembled with a case (230) fixing the latent heat exchanger (220), a sealing member (280) forming the channel by sealing the separators (260), a hole formed through the bottom of the cover (240), and a connection pipe (250) connecting the hole with the engine head of the stirling engine (110).

2. The device according to claim 1, **characterized in that** an insulator (270) is disposed between the separators (260) and the sealing member (280).

3. The device according to claim 1 or 2, **characterized in that** the channel is integrally formed with the inner surface of the cover (240) where the latent heat exchanger (220) is disposed.

4. The device according to claim 3, **characterized in that** the cover (240) including the channel is formed of a ceramic insulator.

5. The device according to claim 3 or 4, **characterized in that** an exhaust gas inlet (250) that is the lower end of the channel is inclined upward.

## Patentansprüche

1. Vorrichtung, welche ein Blockheizkraftwerk aufweist, welches einen Unterboiler (200) umfasst, der eine Auspuffkonstruktion aufweist, wobei das Blockheizkraftwerk einen Elektrizität erzeugenden Stirlingmotor (110) umfasst, der von einem Brenner (120) beheizt wird, und der Unterboiler (200) auf dem Stirlingmotor (110) untergebracht ist, wobei der Unterboiler (200) einen Wärmetauscher (210) für thermische Energie und einen Latent-Wärmetauscher (220) aufweist, um heißes Wasser herzustellen, wobei der Latent-Wärmetauscher (220) mit einem Motorkopf über einen Kanal verbunden ist, durch den ein Abgas zur Heizung des Stirlingmotors (110) geleitet wird, und der Kanal derart geformt ist, dass das ausströmende Abgas seine Wärme tauscht, während es von oben nach unten durch den Latent-Wärmetauscher (220) strömt, **dadurch gekennzeichnet, dass** der Kanal von zwei Trennwänden (260) geformt wird, um in einem Deckel (240), der mit einem Gehäuse (230) zusammengebaut ist, und den Latent-Wärmetauscher (220) hält, einen vorstehenden Kanal zu formen, wobei ein Dichtungsmittel (280) den Kanal durch Dichten der Trennwand (260) bildet, und ein Loch durch den Boden des Deckels (240) geformt ist, und eine Verbindungsleitung (250) das Loch mit dem Motorkopf des Stirlingmotors (110) verbindet.

2. Vorrichtung nach Anspruch 1, **dadurch gekennzeichnet, dass** ein Isolator (270) zwischen den Trennwänden (260) und dem Dichtungsmittel (280) angeordnet ist.

3. Vorrichtung nach Anspruch 1 oder 2, **dadurch gekennzeichnet, dass** der Kanal einstückig mit der Innenwand des Deckels (240) geformt ist, an der der Latent-Wärmetauscher (210) angeordnet ist.

4. Vorrichtung nach Anspruch 3, **dadurch gekennzeichnet, dass** der Deckel (240) einschließlich des Kanals durch einen keramischen Isolator gebildet ist.

5. Vorrichtung nach Anspruch 3 oder 4, **dadurch gekennzeichnet, dass** ein Abgaseinlass (250), welcher das untere Ende des Kanals bildet, nach oben geneigt ist.

## Revendications

1. Dispositif contenant un cogénérateur, comprenant une sous-chaudière (200), contenant une structure d'échappement, ledit cogénérateur comportant un moteur Stirling (110) produisant de l'électricité et étant chauffé par un brûleur de moteur (120), et la sous-chaudière (200) étant disposée sur le moteur Stirling (110), ladite sous-chaudière (200) ayant un échangeur de chaleur sensible (210) et un échangeur de chaleur latente (220), et produisant de l'eau chaude,
un canal étant formé, lequel relie l'échangeur de chaleur latente (220) à une culasse dans laquelle un gaz d'échappement chauffant le moteur Stirling (110) est déchargé, et
le canal étant formé de telle sorte que le gaz d'échappement déchargé échange de la chaleur alors qu'il s'écoule du haut en bas de l'échangeur de chaleur latente (220), **caractérisé en ce que** le canal est formé par des séparateurs (260) pour former un canal faisant saillie dans un couvercle (240) assemblé avec un boîtier (230) fixant l'échangeur de chaleur latente (220), un organe d'étanchéité (280) formant le canal en scellant les séparateurs (260), un trou formé à travers le fond du couvercle (240), et un tube de connexion (250) reliant le trou à la culasse du moteur Stirling (110).

2. Dispositif selon la revendication 1, **caractérisé en ce qu'**un isolant (270) est disposé entre les séparateurs (260) et l'organe d'étanchéité (280).

3. Dispositif selon la revendication 1 ou 2, **caractérisé en ce que** le canal est formé intégralement avec la surface interne du couvercle (240) dans lequel est disposé l'échangeur de chaleur latente (220).

4. Dispositif selon la revendication 3, **caractérisé en ce que** le couvercle (240) comportant le canal est formé d'un isolant en céramique.

5. Dispositif selon la revendication 3 ou 4, **caractérisé en ce qu'**une entrée de gaz d'échappement (250) qui est l'extrémité inférieure du canal est inclinée vers le haut.
